# EUROPÄISCHE PATENTSCHRIFT

(11) **EP 2 115 996 B1**
(45) Veröffentlichungstag und Bekanntmachung des Hinweises auf die Patenterteilung: **03.08.2016**
(21) Anmeldenummer: 08715769.9
(22) Anmeldetag: 14.02.2008
(51) Int. Cl.: H04L 29/06, H04W 12/06, H04W 4/00

(54) **VORRICHTUNG UND VERFAHREN ZUM BEREITSTELLEN VON RFID-IDENTIFIZIERUNGSDATEN FÜR EINEN AUTHENTISIERUNGSSERVER**
DEVICE AND METHOD FOR PROVIDING RFID IDENTIFICATION DATA FOR AN AUTHENTICATION SERVER
DISPOSITIF ET PROCÉDÉ DE FOURNITURE DE DONNÉES D'IDENTIFICATION RFID À UN SERVEUR D'AUTHENTIFICATION

(30) Priorität: 23.02.2007 DE 102007009023
(43) Veröffentlichungstag der Anmeldung: 11.11.2009
(73) Patentinhaber: Siemens Aktiengesellschaft, 80333 München (DE)
(72) Erfinder: FALK, Rainer, 85425 Erding (DE); KOHLMAYER, Florian, 82319 Starnberg (DE); KÖPF, Andreas, 81739 München (DE)
(86) Internationale Anmeldenummer: PCT/EP2008/001131
(87) Internationale Veröffentlichungsnummer: WO 2008/101634

(56) Entgegenhaltungen:
- WO-A1-2006/100714
- DE-A1-102004 014 411
- US-A1- 2007 002 140
- DANTU ET AL: "EAP methods for wireless networks" COMPUTER STANDARDS AND INTERFACES, ELSEVIER SEQUOIA. LAUSANNE, CH, Bd. 29, Nr. 3, 2. Februar 2007 (2007-02-02), Seiten 289-301, XP005871183 ISSN: 0920-5489
- YONG-WOON KIM ET AL: "Review report of Standardization Issues on Network Aspects of Identification including RFID; D 155" ITU-T DRAFT STUDY PERIOD 2005-2008, INTERNATIONAL TELECOMMUNICATION UNION, GENEVA ; CH, Bd. STUDY GROUP 17, 19. April 2006 (2006-04-19), Seiten 1-49, XP017408293

## Beschreibung

Die Erfindung betrifft eine Vorrichtung und ein Verfahren zur Übertragung von RFID-Identifizierungsdaten an einen Authentisierungsserver, beispielsweise in einem Flughafen.

Die Radio Frequency Identification (RFID) ermöglicht eine automatische Identifikation zur Lokalisierung von Objekten.

Ein herkömmliches RFID-System umfasst neben einem Transponder ein Lesegerät mit zugehöriger Antenne, welches auch als Reader bezeichnet wird. Transponder an oder in den Objekten speichern Daten, die berührungslos und ohne Sichtkontakt gelesen werden können. Je nach Ausführung, d. h. je nachdem ob es sich um aktive oder passive Transponder handelt, und in Abhängigkeit von der benutzten Frequenzbandsendeleistung sowie Umwelteinflüssen liegt die Reichweite zwischen wenigen Zentimetern und mehreren Kilometern. Die Datenübertragung zwischen dem Transponder und dem Lesegerät findet mittels elektromagnetischer Wellen statt.

RFID-Tags werden vielfältig eingesetzt, beispielsweise in Logistikprozessen zur Authentisierung von Personen und Gegenständen. Die RFID-Tags werden von dem RFID-Lesegerät erfasst, welches die auf dem RFID-Tag gespeicherten Daten erfasst und an eine sogenannte RFID-Middleware überträgt. Die RFID-Leseeinheiten sind üblicherweise kabelgebunden mit einem Datennetzwerk verbunden. Dabei ist das RFID-Lesegerät beispielsweise über eine serielle Schnittstelle RS-232 oder USB mit einem PC verbunden.

Eine RFID-Leseeinheit ist bei manchen Systemen über eine WLAN-Schnittstelle mit einem WLAN-Access Point (AP) verbunden. Dabei gewährt der WLAN-Access Point (AP) dem Endgerät nach erfolgter Authentisierung Zugang zu dem Datennetzwerk. Hierzu erfolgt entweder eine EAP-basierte WLAN-Link-Layer-Authentisierung oder es erfolgt eine Authentisierung über einen Web-Browser des WLAN-Client-Knotens, der mit dem RFID-Lesegerät verbunden ist, gegenüber einem Web-Server. Erst nach erfolgreicher Überprüfung eingegebener Benutzer-Credentials wird die Verbindung zu dem Datennetzwerk hergestellt.

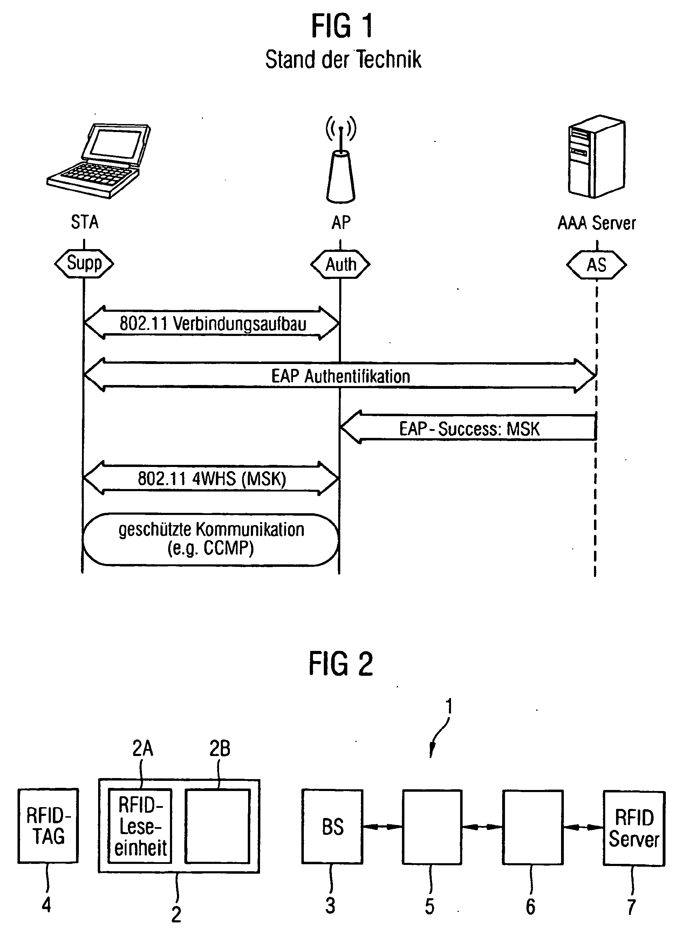

Figur 1 zeigt eine EAP-basierte WLAN-Zugangsauthentisierung nach dem Stand der Technik. Die Kommunikation zwischen dem WLAN-Access Point bzw. der Basisstation und dem Authentisierungsserver erfolgt über das Radius- oder Diameter-Protokoll. Ein Master Session Key MSK wird im Zuge der Authentisierung als Attribut an den Access Point AP als Teil einer EAP-Success-Nachricht gesendet. Der Master Session Key MSK wird für ein 802.11-vier-Wege-Handshake (4WHS) zwischen dem Endgerät bzw. der WLAN-Station (STA) und dem Access Point AP bzw. der Basisstation gemäß dem 802.11-Standard verwendet. Der Zugangsknoten bzw. Access Point AP arbeitet als Authentikator und kommuniziert mit dem Authentisierungsserver bzw. AAA-Server direkt oder über einen oder mehrere AAA-Proxy-Server, welche die Authentisierungsnachrichten zwischen dem Access Point AP und dem Authentisierungsserver routen.

Eine herkömmliche RFID-Leseeinheit, die, wie in Figur 1 dargestellt, über eine WLAN-Schnittstelle und einen WLAN-Access Point AP mit einem Authentisierungsserver verbunden ist, erhält einen Netzwerkzugang erst nach erfolgter Authentisierung. Dazu muss die RFID-Leseeinheit mit WLAN-Security Credentials bzw. Sicherheitskonfigurationsdaten konfiguriert werden. Nur mit passenden Security-Credentials kann die RFID-Leseeinheit über die WLAN-Schnittstelle die erfassten RFID-Identifizierungsdaten, die aus einem RFID-Tag ausgelesen werden, übertragen. Dies ist allerdings mit einem erheblichen Administrationsaufwand zum Konfigurieren der RFID-Leseeinheit verbunden. Die Konfiguration einer RFID-Leseeinheit mit passenden Security-Credentials ist besonders dann umständlich, wenn die RFID-Leseeinheit in einem mobilen Transportfahrzeug, beispielsweise in einem LKW oder einem Flugzeug, angebracht ist. In diesem Falle muss die RFID-Leseeinheit derart konfiguriert werden, dass sie an unterschiedliche WLAN-Access Points AP angebunden werden kann (Global Roaming). Ein Beispiel für eine derartige Situation ist eine RFID-Leseeinheit, die an oder in einem Flugzeug angebracht ist und die in einem Flughafen an das jeweilige Flughafen-Infrastruktur-Datennetzwerk angebunden werden soll, um RFID-unterstützte Flughafen-Logistikprozesse zu unterstützen, wie beispielsweise das Be- oder Entladen des Flugzeugs, die Kabinenreinigung oder im Bereich des Caterings.

Einen offenen bzw. ungeschützten WLAN-Access Point AP zu betreiben, um die Konfiguration der RFID-Leseeinheit zur Senkung des Administrationsaufwands zu vermeiden, birgt allerdings erhebliche Sicherheitsrisiken.

Aus Dantu et al: "EAP methods for wireless networks", Computer Standards and Interfaces, Elsevier Sequoia.Lausanne, CH, Bd. 29, Nr. 3, 2. Februar 2007 (2007-02-02), Seiten 289-301, XP005871183 ISSN: 0920-5489 ist ein Verfahren mit den Merkmalen des Oberbegriffs des Anspruchs 19 bekannt geworden.

Es ist daher die Aufgabe der vorliegenden Erfindung, eine Vorrichtung und ein Verfahren zu schaffen, mit welchen der Administrationsaufwand zum Konfigurieren der RFID-Leseeinheit vermieden wird und gleichzeitig eine sichere Datenübertragung gewährleistet wird.

Diese Aufgabe wird erfindungsgemäß durch eine Vorrichtung mit den im Patentanspruch 1 angegebenen Merkmalen gelöst.

Die Erfindung schafft eine Vorrichtung mit einer RFID-Leseeinheit, die zur Übertragung von aus RFID-Tags ausgelesenen RFID-Identifizierungsdaten mindestens eine RFID-Protokollnachricht in Authentisierungsnachrichten einkodiert an einen Authentisierungsserver überträgt.

Bei einer Ausführungsform der erfindungsgemäßen Vorrichtung weist die übertragene RFID-Protokollnachricht die RFID-Identifizierung und eine Identifizierung der RFID-Leseeinheit auf.

Bei einer Ausführungsform der erfindungsgemäßen Vorrichtung ist eine Adresse des Authentisierungsservers in der Vorrichtung konfiguriert.

Bei einer Ausführungsform der erfindungsgemäßen Vorrichtung wird eine Adresse des Authentisierungsserver anhand des RFID-Identifizierers durch die Vorrichtung bestimmt.

Bei einer Ausführungsform der erfindungsgemäßen Vorrichtung ist die Adresse des Authentisierungsserver in dem RFID-Identifizierer enthalten.

Bei einer Ausführungsform der erfindungsgemäßen Vorrichtung weist die Vorrichtung einen Speicher zum Abspeichern einer Tabelle auf, in der Adressen von Authentisierungsservern zu verschiedenen RFID-Identfizierern abgespeichert sind.

Bei einer Ausführungsform der erfindungsgemäßen Vorrichtung ist die RFID-Identifizierung in einem Netzwerkzugangsidentifizierer NAI (Network Access Identifier) der Authentisierungsnachricht einkodiert.

Bei einer Ausführungsform der erfindungsgemäßen Vorrichtung wird die Authentisierungsnachricht über ein Zugangsnetzwerk an den Authentisierungsserver übertragen.

Bei einer Ausführungsform der erfindungsgemäßen Vorrichtung ist das Zugangsnetzwerk ein drahtloses Zugangsnetzwerk.

Bei einer Ausführungsform der erfindungsgemäßen Vorrichtung ist das drahtlose Zugangsnetzwerk ein WLAN-Netzwerk.

Bei einer Ausführungsform der erfindungsgemäßen Vorrichtung ist das drahtlose Zugangsnetzwerk ein WiMax-Netz.

Bei einer Ausführungsform der erfindungsgemäßen Vorrichtung werden die Authentisierungsnachrichten von der RFID-Leseeinheit über ein drahtgebundenes Zugangsnetzwerk zu dem Authentisierungsserver übertragen.

Bei einer Ausführungsform der erfindungsgemäßen Vorrichtung werden die Authentisierungsnachrichten mittels eines EAP-Datenübertragungsprotokolls übertragen.

Bei einer Ausführungsform der erfindungsgemäßen Vorrichtung werden die Authentisierungsnachrichten mittels eines AAA-Datenübertragungsprotokolls übertragen.

Bei einer Ausführungsform der erfindungsgemäßen Vorrichtung werden die Authentisierungsnachrichten mittels eines RADIUS-Datenübertragungsprotokolls übertragen.

Bei einer Ausführungsform der erfindungsgemäßen Vorrichtung werden die Authentisierungsnachrichten mittels eines DIAMETER-Datenübertragungsprotokolls übertragen.

Bei einer Ausführungsform der erfindungsgemäßen Vorrichtung werden die Authentisierungsnachrichten mittels eines HTTP-Datenübertragungprotokolls übertragen.

Bei einer Ausführungsform der erfindungsgemäßen Vorrichtung werden die Authentisierungsnachrichten über mindestens einen Authentisierungs-Proxy-Server an den Authentisierungsserver übertragen.

Bei einer Ausführungsform der erfindungsgemäßen Vorrichtung ist die Vorrichtung in einem mobilen Transportfahrzeug vorgesehen.

Bei einer Ausführungsform der erfindungsgemäßen Vorrichtung wird das Transportfahrzeug durch ein Schiff, ein Flugzeug, einen Personenkraftwagen oder einen Lastkraftwagen gebildet.

Die Erfindung schafft ferner ein Verfahren zum Bereitstellen von RFID-Identifizierern, die aus RFID-Tags ausgelesen werden, für einen Authentisierungsserver, wobei mindestens eine RFID-Protokollnachricht einkodiert in Authentisierungsnachrichten an den Authentisierungsserver übertragen wird.

Die Erfindung schafft ferner ein System zum Übertragen von RFID-Identfizierern, die aus RFID-Tags auslesbar sind, an einen Authentisierungsserver, wobei mindestens eine RFID-Protokollnachricht in Authentisierungsnachrichten einkodiert von einer RFID-Leseeinheit an den Authentisierungsserver übertragbar ist.

Im Weiteren werden Ausführungsformen der erfindungsgemäßen Vorrichtung sowie des erfindungsgemäßen Verfahrens zur Erläuterung erfindungswesentlicher Merkmale beschrieben.

Es zeigen
- Figur 1: ein Signaldiagramm zur Darstellung eines EAP-basierten WLAN-Zugangsauthentisierungsvorgangs nach dem Stand der Technik;
- Figur 2: ein Blockschaltbild einer möglichen Ausführungsform des erfindungsgemäßen Systems zum Übertragen von RFID-Identifizierungsdaten;
- Figur 3: ein Beispiel für eine mögliche Ausführungsform des erfindungsgemäßen Systems zum Übertragen von RFID-Identifizierungsdaten;
- Figur 4: ein weiteres Beispiel für eine mögliche Ausführungsform des erfindungsgemäßen System zum Übertragen von RFID-Identifizierüngsdaten;
- Figur 5: ein Nachrichten-Flussdiagramm zur Darstellung einer EAP-basierten Übertragung von RFID-Identifizierungsdaten gemäß einer möglichen Ausführungsform des erfindungsgemäßen Verfahrens;
- Figur 6: ein weiteres Nachrichten-Flussdiagramm einer EAP-basierten Übertragung von RFID-Identifizierungsdaten gemäß einer weiteren Ausführungsform des erfindungsgemäßen Verfahrens;
- Figur 7: ein Nachrichten-Flussdiagramm einer HTTP-basierten Übertragung von RFID-Identifizierungsdaten zur Darstellung einer weiteren möglichen Ausführungsform des erfindungsgemäßen Verfahrens.

Figur 2 zeigt eine mögliche Ausführungsform eines Systems 1 zum Übertragen von RFID-Identifizierungsdaten. Bei einer möglichen Ausführungsform einer erfindungsgemäßen Vorrichtung 2 enthält diese eine RFID-Leseeinheit 2A und einen Client 2B zum Nachrichtenaustausch mit einer Basisstation 3 über eine Funkschnittstelle. Die RFID-Leseeinheit 2A liest RFID-Identifizierungsdaten aus einem RFID-Tag 4 aus. Die Basisstation 3 ist in dem in Figur 2 dargestellten System 1 über mindestens einen Authentisierungs-Proxy-Server 5 mit einem Authentisierungsserver 6, der sich in einem Heimatnetz der Vorrichtung 2 befindet, verbunden. Der Authentisierungsserver 6 ist seinerseits an einem RFID-Server 7 angeschlossen, der die übertragenen RFID-Identifizierungsdaten auswertet. Bei der in Figur 2 dargestellten Ausführungsform des erfindungsgemäßen Systems 1 werden die aus den RFID-Tags 4 ausgelesenen RFID-Identifizierungsdaten von der Vorrichtung 2 einkodiert in mindestens eine RFID-Protokollnachricht an den Authentisierungsserver 6 übertragen. Die Basisstation 3 ist direkt oder indirekt über den Authentisierungs-Proxy-Server 5 mit dem Authentisierungs-Home-Server 6 verbunden.

Bei dem in Figur 2 dargestellten Ausführungsbeispiel sind die RFID-Leseeinheit 2A und der Client-Rechner 2B in einer Vorrichtung 2 integriert. Bei einer alternativen Ausführungsform können die beiden Einheiten 2A, 2B voneinander lokal getrennt sein. Bei der in Figur 2 dargestellten Ausführungsform handelt es sich bei dem Zugangsnetzwerk um ein drahtloses Zugangsnetzwerk mit einer Basisstation 3, beispielsweise einer WLAN-Basisstation oder einer WiMax-Basisstation.

Bei einer alternativen Ausführungsform werden die Authentisierungsnachrichten nicht drahtlos sondern drahtgebunden an die Vorrichtung 2 mit dem Authentisierungsserver 6 übertragen, d. h. das Zugangsnetzwerk ist nicht drahtlos, wie in Figur 2 dargestellt, sondern ein drahtgebundenes Zugangsnetzwerk. Die RFID-Leseeinheit 2 überträgt eine RFID-Protokollnachricht über den Client 2, die Basisstation 3, einen gegebenenfalls vorgesehenen Authentisierungs-Proxy-Server 5 an den Authentisierungs-Home-Server 6. Dabei werden die aus dem RFID-Tag ausgelesenen RFID-Identifizierungsdaten in die RFID-Protokollnachricht einkodiert. Die übertragene RFID-Protokollnachricht weist neben den RFID-Identifizierungsdaten bei einer möglichen Ausführungsform zusätzlich eine Identifizierung der RFID-Leseeinheit 2A auf.

Bei einer möglichen Ausführungsform ist die Adresse des Authentisierungsservers 6 in der Vorrichtung 2 vorkonfiguriert bzw. konfigurierbar.

Bei einer alternativen Ausführungsform wird die Adresse des Authentisierungsservers 6 durch die Vorrichtung 2 anhand der ausgelesenen RFID-Identifizierungsdaten bestimmt. Beispielsweise ist die Adresse des Authentisierungsserver 6 in den ausgelesenen RFID-Identifizierungsdaten enthalten.

Bei einer möglichen Ausführungsform weist die Vorrichtung 2 beispielsweise einen Speicher zum Speichern einer Tabelle auf, in der Adressen von Authentisierungsservern 6 für verschiedene RFID-Identifizierungsdaten abgespeichert sind.

Bei einer möglichen Ausführungsform werden die RFID-Identifizierungsdaten, die durch die RFID-Leseeinheit 2A aus dem RFID-Tag 4 ausgelesen werden, in einen NetzwerkzugangsIdentifizierer NAI (Network Access Identifier) einer Authentisierungsnachricht einkodiert.

Die Authentisierungsnachrichten können über verschiedene Datenübertragungsprotokolle übertragen werden, beispielsweise mittels eines EAP-Datenübertragungsprotokolls, mittels eines Radius-Datenübertragungsprotokolls oder mittels eines HTTP-Datenübertragungsprotokolls.

Die in Figur 2 dargestellte Vorrichtung 2 kann beispielsweise in einem mobilen Transportfahrzeug angebracht werden. Bei dem Transportfahrzeug kann es sich um ein beliebiges Transportfahrzeug, beispielsweise um ein Schiff, ein Flugzeug oder um einen Lastkraftwagen handeln.

Die in Figur 2 dargestellte RFID-Leseeinheit 2A liest in der Regel die RFID-Identifizierungsdaten nicht aus einem einzelnen RFID-Tag 4 aus, sondern aus mehreren RFID-Tags 4 innerhalb seiner Reichweite. Die RFID-Tags 4 sind zur Identifikation eines Gegenstandes beispielsweise an dem jeweiligen Gegenstand angebracht.

Die RFID-Datenübertragungsprotokolle lassen sich allgemein in Tag- und Reader-Datenprotokolle unterscheiden. Die Tag-Datenübertragungsprotokolle bestimmen die Kommunikation zwischen dem RFID-Tag 4 und der RFID-Leseeinheit 2A. Demgegenüber definieren die Reader-Datenübertragungsprotokolle die Nachrichtenübertragungen zwischen der RFID-Leseeinheit 2A und dem RFID-Hintergrundsystem, d. h. zwischen der RFID-Leseeinheit 2A und dem Authentisierungs-Home-Server 6. Verschiedene Hersteller von Endgeräten bzw. Systemen nutzen dabei zum Teil unterschiedliche Protokollimplementierungen. Unabhängig vom Hersteller und der Art des RFID-Tags 4 gibt es allerdings eine Reihe von Eigenschaften, die jedes RFID-Datenübertragungsprotokoll unterstützt. Im einfachsten Fall ist das bei einem Tag-Datenübertragungsprotokoll der Prozess "Singulation", "Anti-Collision" und "Identity". Der Vorgang "Singulation" ist dabei zum eindeutigen Identifizieren und Auslesen individueller Tags vorgesehen. Der Vorgang "Anti-Collision" reguliert beispielsweise das Antwort-Timing, um einzelne Tags 4 direkt auslesen zu können. Die Eigenschaft "Identity" beschreibt, welche Daten in welcher Weise auf dem Tag 4 gespeichert werden.

Die Reader-Datenübertragungsprotokolle, welche die Kommunikation zwischen der RFID-Leseeinheit 2A und dem Authentisierungsserver 6 bestimmen, lassen sich in "Commands" und "Notifications" unterteilen. Ein angeschlossenes System benutzt die sogenannten "Commands" bzw. Befehlsnachrichten, um Aktionen auf der RFID-Leseeinheit 2A zu veranlassen, beispielsweise Daten auszulesen oder eine Konfiguration zu ändern. Die "Notifications" bzw. Anzeigenachrichten sind Meldungen, die die RFID-Leseeinheit 2A an das System sendet, beispielsweise ausgelesene Daten, Alarme oder auch Fehlermeldungen. Bei dem System 1, wie es in Figur 2 dargestellt ist, muss die RFID-Leseeinheit 2A bzw. die Vorrichtung 2 keinen vollständigen Netzwerkzugang 1 einrichten. Statt dessen werden die bei der Netzwerkanmeldung übertragenen Authentisierungsnachrichten bei der Vorrichtung 2 dazu eingesetzt, die zu übertragenden Informationen bzw. RFID-Identifizierungsdaten zu übertragen.

Bei einer ersten Ausführungsform der Vorrichtung 2 wird eine RFID-Identifizierung einkodiert in eine Authentisierungsnachricht übertragen. Bei einer weiteren Ausführungsform wird eine bzw. werden mehrere RFID-Protokollnachrichten in Authentisierungsnachrichten einkodiert übertragen.

Bei einer EAP-basierten Netzwerkanmeldung werden die Daten bzw. RFID-Identifizierungsdaten über EAP-Nachrichten in den übertragenen Netzwerkzugangsidentifizierer NAI (Network Access Identifier) einkodiert. Dabei werden entweder die erfassten Identifizierungsdaten des RFID-Tags 4 übertragen oder es wird das RFID-Datenübertragungsprotokoll zwischen dem RFID-Tag 4 und der RFID-Leseeinheit 2A getunnelt übertragen.

Für den Zugangsknoten bzw. Access Point AP bzw. für die Basisstation 3, wie sie in Figur 2 dargestellt ist, ist diese Datenübertragung in der Regel transparent, sodass die Basisstation 3 hierfür nicht eigens angepasst werden muss. In einer weiteren möglichen Ausprägung können auch die Authentisierungs-Proxy-Server die Datenübertragung transparent, ohne angepasst werden zu müssen, weiterleiten. In diesem Fall muss nur der letzte/Ziel Authentisierungserver die Nachrichten verstehen können. Die RFID-Daten werden bei der in Figur 2 dargestellten Ausführungsform des erfindungsgemäßen Systems 1 über die Authentisierungs-Infrastruktur, d. h. über die Basisstation 3 und den Authentisierungs-Proxy-Server 5 an den Authentisierungs-Home-Server 6 übertragen.

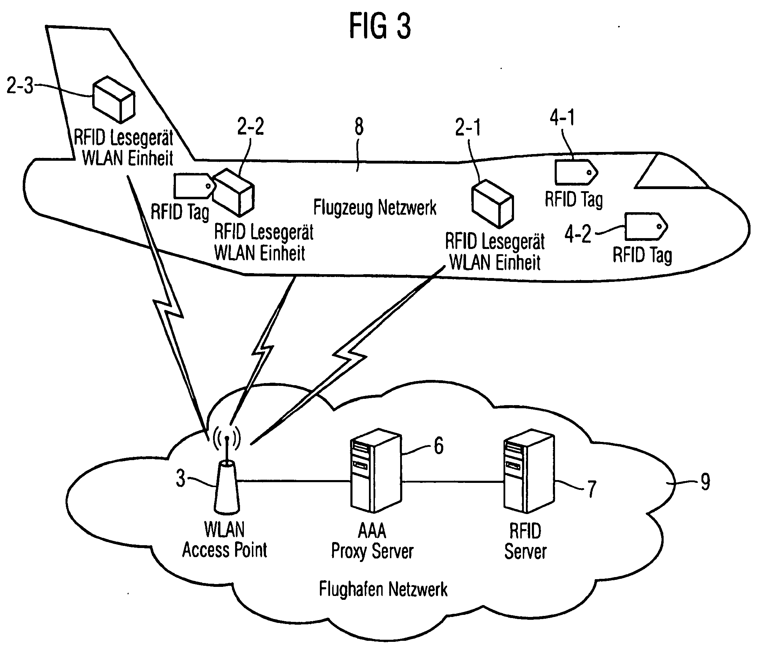

Figur 3 zeigt ein Beispiel für eine mögliche Ausführungsform des erfindungsgemäßen Systems 1 zum Übertragen von RFID-Identifizierungsdaten. Bei dem in Figur 3 dargestellten Ausführungsbeispiel weist ein Transportfahrzeug 8, beispielsweise ein Flugzeug, mehrere Vorrichtungen 2 auf, die jeweils eine RFID-Leseeinheit 2A und einen Client-Rechner 2B, beispielsweise einen WLAN-Client0, enthalten. Diese kommunizieren mit einer WLAN-Basisstation 3, der einen Zugangsknoten zu einem Netzwerk 9 eines Flughafens bildet. Die RFID-Tags 4 bezeichnen beispielsweise Flugzeugbauteile zur Überwachung der Wartung, oder auch Gepäckstücke oder Rollwagen für Catering sowie Personal zur Kabinenreinigung. Die RFID-Identifizierungsdaten dieser Tags 4 werden mit Hilfe der an Bord des Flugzeugs 8 befindlichen RFID-Leseeinheiten 2A ausgelesen und an den WLAN-Access Point 3 übertragen. Dabei bilden die in der Vorrichtung 2 vorgesehenen Client-Rechner ein WLAN-Interface, um die erfassten RFID-Identifizierungsdaten an das Airport-Netzwerk 9 zu übertragen.

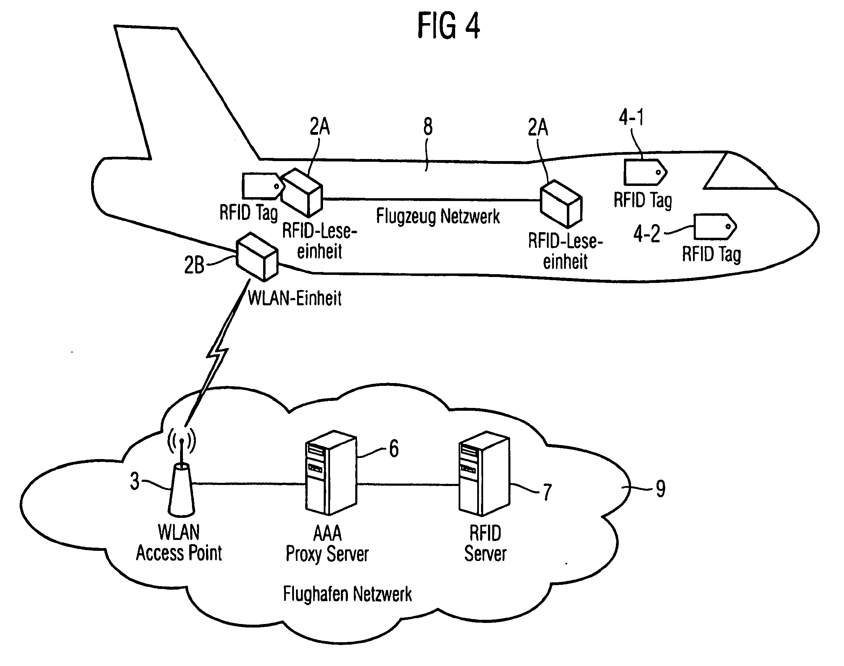

Figur 4 zeigt ein weiteres Ausführungsbeispiel für mehrere RFID-Leseeinheiten 2A, die über einen einzigen WLAN-Client des Flugzeugs 8 Daten an das Airport-Netzwerk 9 übertragen. Hierzu sind die RFID-Leseeinheiten 2A über ein lokales Netzwerk miteinander verbunden.

Bei den in Figuren 3, 4 dargestellten Ausführungsformen erfolgt das RFID-Event Processing bzw. die Auswertung der übertragenen RFID-Identifizierungsdaten innerhalb des Airport-Datennetzwerkes 9 durch einen RFID-Server 7. Dies ist insbesondere sinnvoll beim Einsatz in Airport-Logistikprozessen.

Bei einer alternativen Ausführungsform werden die RFID-Identifizierungsdaten an entfernte Server übertragen, beispielsweise an einen Server einer Fluggesellschaft, an einen Server einer Service-Firma oder an einen Server eines Flugzeug-Herstellers. Somit ist es möglich, beispielsweise von dem Authentisierungsserver 6 des Airport-Netzwerks 9 die Authentisierungsnachrichten über beliebige Netzwerke, beispielsweise das Internet, an den entsprechenden Server weiterzuleiten. Bei einer möglichen Ausführungsform leitet bereits der Authentisierungs-Proxy-Server 5, wie er in Figur 2 dargestellt ist, die Authentisierungsnachrichten weiter. In diesem Fall verfügt das Airport-Netzwerk 9 über kein lokales RFID-Event Processing bzw. weist keinen RFID-Event-Processing-Server 7 auf.

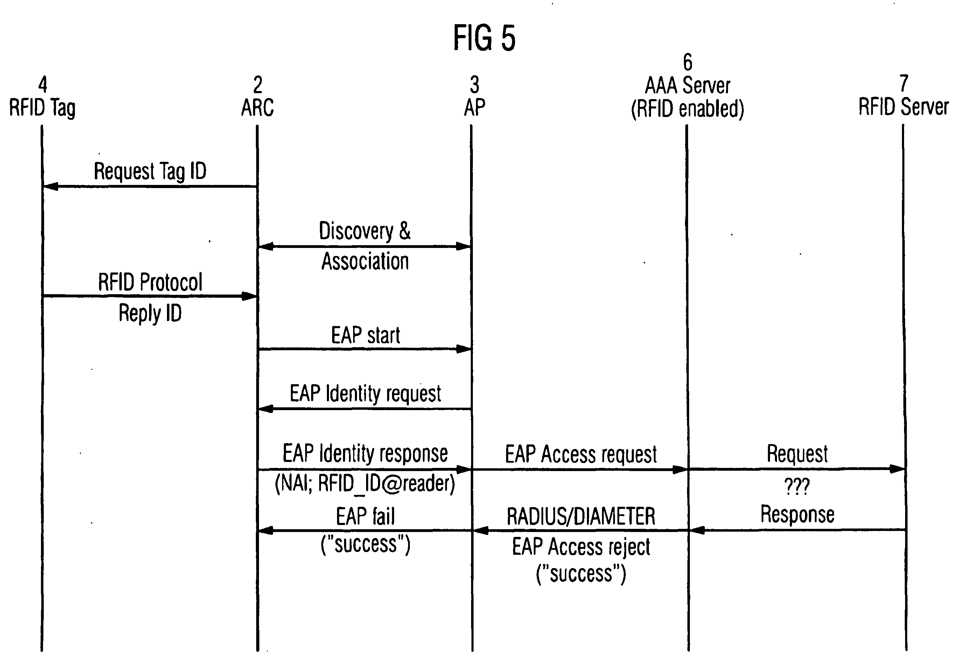

Figur 5 zeigt ein Nachrichten-Flussdiagramm zur Darstellung einer möglichen Ausführungsform des erfindungsgemäßen Verfahrens zum Bereitstellen von RFID-Identifizierungsdaten, die aus RFID-Tags 4 ausgelesen werden. Bei dem in Figur 5 dargestellten Beispiel wird ein RFID-Identifizierer (RFID-ID) des RFID-Tags 4 von der RFID-Leseeinheit 2A der Vorrichtung 2 erfasst. Daraufhin beginnt der Access Point 3 eine WLANkonforme EAP-basierte Netzwerkanmeldung. Bei der in Figur 5 dargestellten Ausführungsform empfängt die Basisstation bzw. der Access Point 3 eine Nachricht mit einer Netzwerkzugangsidentifizierung NAI (Network Access Identifier), die den ausgelesenen RFID-Identifizierer (RFID-ID) enthält.

Eine Netzwerkzugangsidentifizierung NAI weist im Allgemeinen die folgende Datenform auf: "user@realm", beispielsweise "mueller@lufthansa.com".

Bei einer ersten Ausführungsform wird die RFID-Identifizierung bzw. die RFID-Identifizierungsdaten RFID-ID in den User- bzw. Nutzerteil einkodiert, beispielsweise "RFID-ID@lufthansa.com".

Bei einer alternativen Ausführungsform werden die RFID-Identifizierungsdaten RFID-ID in den sogenannten Realm-Teil der Netzwerkzugangsidentifizierung NAI einkodiert, beispielsweise: "reader@ RFID-ID.lufthansa.com". Bei einer möglichen Ausführungsform wird zusätzlich der Identifizierer der RFID-Leseeinheit 2A (ARC-ID) in die Authentisierungsnachrichten einkodiert, beispielsweise "RFID-ID.arc-id@lufthansa.com" oder "arc-id@ RFID-ID.lufthansa.com".

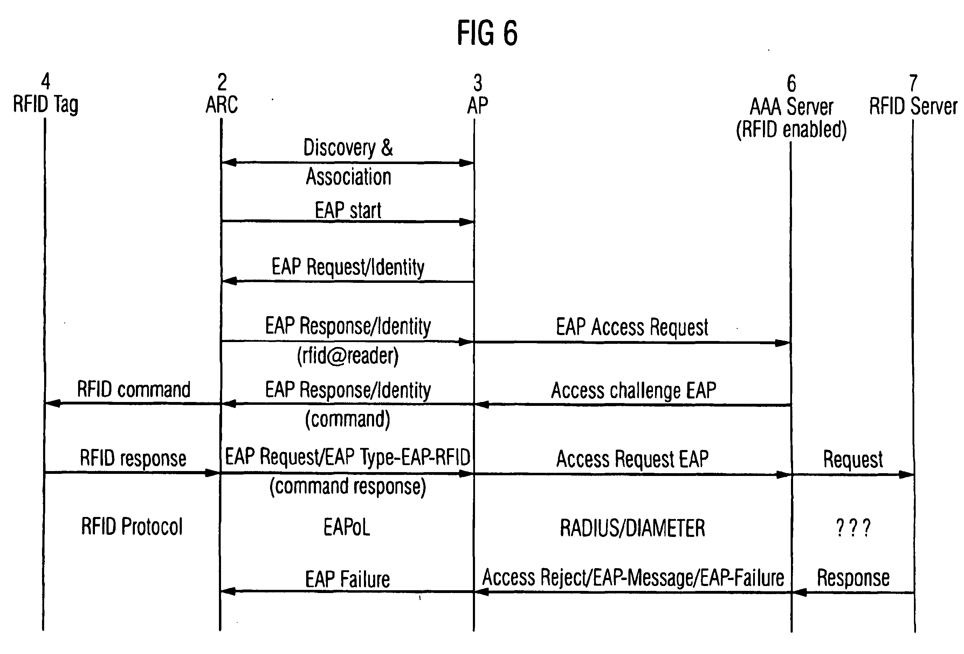

Figur 6 zeigt eine alternative Ausführungsform, bei der die RFID-Identifizierungsdaten getunnelt übertragen werden. Bei dieser Ausführungsform werden nicht die erfassten RFID-Identifizierungsdaten selbst übertragen, sondern die RFID-Protokollnachrichten zum Lesen/Ändern der RFID-Identifizierungstags werden bei der Datenübertragung eingetunnelt. Bei dieser Ausführungsform muss die Vorrichtung mit der RFID-Leseeinheit 2A bzw. die ARC (Airplane RFID Controller), welche über die Luftschnittstelle mit einem RFID-Tag 4 kommuniziert, das jeweils verwendete RFID-Datenübertragungsprotokoll nicht kennen. Bei dieser Ausführungsform kann daher beispielsweise eine in einem Flugzeug 8 angebrachte RFID-Leseeinheit universell in unterschiedlichen Flughäfen, die unterschiedliche RFID-Systeme verwenden, eingesetzt werden. Dabei ist es auch möglich, flexibler sichere RFID-Tags 4 zu unterstützen, d. h. RFID-Tags 4, bei denen lediglich ein Identifizierer kryptographisch ungeschützt übertragen wird. Wird die Kommunikation mit dem RFID-Tag 4 kryptographisch geschützt, z. B. unter Verwendung eines Secret-Key-Verfahrens, muss bei dieser Ausführungsform nicht die RFID-Leseeinheit 2A das Schlüsselmaterial kennen, sondern erst der Authentisierungsserver 6 bzw. der RFID-Server 7. Dies ist insbesondere dann sinnvoll, wenn eine RFID-Leseeinheit 2A in einem Flugzeug 8 angebracht ist und für Flughafen-RFID-Anwendungen verwendet werden soll, da die RFID-Leseeinheit 2A innerhalb des

Flugzeuges 8 im Allgemeinen nicht die erforderlichen Security Credentials des jeweiligen Flughafens verfügbar hat.

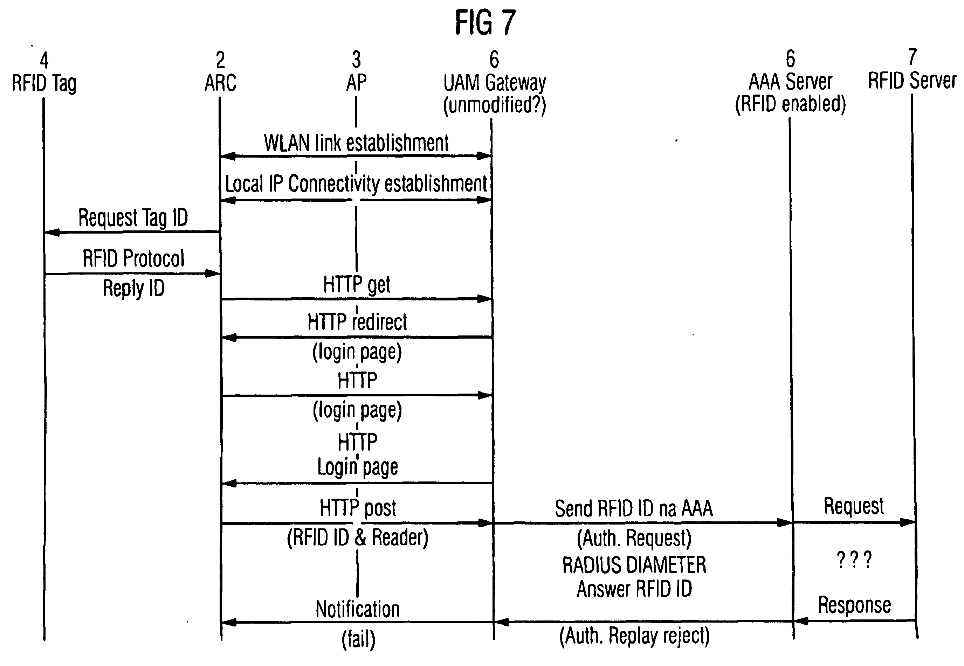

Figur 7 zeigt ein Nachrichten-Flussdiagramm zur Darstellung einer weiteren Ausführungsform des erfindungsgemäßen Verfahrens. Während bei den in Figuren 5, 6 dargestellten Ausführungsformen die Daten mittels eines EAP-Datenübertragungsprotokolls übertragen werden, erfolgt bei der in Figur 7 dargestellten Ausführungsform die Datenübertragung mittels eines HTTP-Datenübertragungsprotokolls. Figur 7 zeigt den Fall einer HTTP-basierten-WLAN-Authentisierung. Bei dieser Ausführungsform werden die Authentisierungsnachrichten anstatt in die EAP-Nachrichten in entsprechende HTTP-Nachrichten einkodiert.

## Patentansprüche

1. Vorrichtung (2) mit einer RFID-Leseeinheit (2A),
**dadurch gekennzeichnet dass**,
die zur Übertragung von aus RFID-Tags (4) ausgelesenen RFID-Identifizierungsdaten ausgestaltet ist, die ausgelesenen RFID-Identifizierungsdaten in mindestens eine RFID-Protokollnachricht einzukodieren und die mindestens eine RFID-Protokollnachricht in Authentisierungsnachrichten einkodiert an einen Authentisierungsserver (6) zu übertragen.

2. Vorrichtung nach Anspruch 1,
wobei die übertragene RFID-Protokollnachricht neben den RFID-Identifizierungsdaten eine Identifizierung der RFID-Leseeinheit (2A) aufweist.

3. Vorrichtung nach Anspruch 1,
wobei eine Adresse des Authentisierungsservers (6) in der Vorrichtung (2) konfiguriert ist.

4. Vorrichtung nach Anspruch 1,
wobei eine Adresse des Authentisierungsservers (6) anhand der RFID-Identifizierungsdaten durch die Vorrichtung (2) bestimmt wird.

5. Vorrichtung nach Anspruch 4,
wobei die Adresse des Authentisierungsservers (6) in den RFID-Identifizierungsdaten enthalten ist.

6. Vorrichtung nach Anspruch 4,
wobei die Vorrichtung (2) einen Speicher zum Abspeichern einer Tabelle aufweist, in der Adressen von Authentisierungsservern (6) zu verschiedenen RFID-Identifizierungsdaten abgespeichert sind.

7. Vorrichtung nach Anspruch 1,
wobei die RFID-Identifizierungsdaten in einem NetzwerkZugangsidentifizierer NAI, Network Access Identifier, der Authentisierungsnachricht einkodiert ist.

8. Vorrichtung nach Anspruch 1,
wobei die Authentisierungsnachricht über ein Zugangsnetzwerk an den Authentisierungsserver (6) übertragen wird.

9. Vorrichtung nach Anspruch 8,
wobei das Zugangsnetzwerk ein drahtloses Zugangsnetzwerk ist.

10. Vorrichtung nach Anspruch 9,
wobei das drahtlose Zugangsnetzwerk ein W-LAN Netzwerk ist.

11. Vorrichtung nach Anspruch 9,
wobei das drahtlose Zugangsnetzwerk ein WiMAX-Netz ist.

12. Vorrichtung nach Anspruch 1,
wobei die Authentisierungsnachrichten von der RFID-Leseeinheit (2A) über ein drahtgebundenes Zugangsnetzwerk zu dem Authentisierungsserver (6) übertragen werden.

13. Vorrichtung nach Anspruch 1,
wobei die Authentisierungsnachrichten mittels eines EAP-Datenübertragungsprotokolls übertragen werden.

14. Vorrichtung nach Anspruch 1,
wobei Authentisierungsnachrichten mittels eines Radius-Datenübertragungsprotokolls übertragen werden.

15. Vorrichtung nach Anspruch 1,
wobei die Authentisierungsnachrichten mittels eines HTTP-Datenübertragungsprotokolls übertragen werden.

16. Vorrichtung nach Anspruch 1,
wobei die Authentisierungsnachrichten über mindestens einen Authentisierungsproxyserver (5) an den Authentisierungsserver (6) übertragen werden.

17. Vorrichtung nach Anspruch 1,
wobei die Vorrichtung (2) in einem mobilen Transportfahrzeug (8) vorgesehen ist.

18. Vorrichtung nach Anspruch 17,
wobei das Transportfahrzeug (8) durch ein Schiff, ein Flugzeug oder einen Lastkraftwagen gebildet wird.

19. Verfahren zum Bereitstellen von RFID-Identifizierungsdaten, die aus RFID-Tags (4) ausgelesen werden, für einen Authentisierungsserver (6),
**dadurch gekennzeichnet, dass**
die ausgelesenen RFID-Identifizierungsdaten in mindestens eine RFID-Protokollnachricht einkodiert werden und die mindestens eine RFID-Protokollnachricht einkodiert in Authentisierungsnachrichten an den Authentisierungsserver (6) übertragen wird.

20. System (1) zum Übertragen von RFID-Identifizierungsdaten, die aus RFID-Tags (4) auslesbar sind, an einen Authentisierungsserver (6),
**dadurch gekennzeichnet, dass** das System derart ausgebildet ist, die ausgelesenen RFID-Identifizierungdaten von einer RFID-Leseeinheit (2A) in mindestens eine RFID-Protokollnachricht einzukodieren und die mindestens eine RFID-Protokollnachricht in Authentisierungsnachrichten einkodiert von einer RFID-Leseeinheit (2A) an den Authentisierungsserver (6) zu übertragen.

## Claims

1. Apparatus (2) with an RFID reading unit (2A),
**characterised in that**
it is embodied to encode the read-out RFID identification data into at least one RFID protocol message and to transmit the at least one RFID protocol message in authentication messages encoded to an authentication server (6) in order to transmit RFID identification data read out from RFID tags (4).

2. Apparatus according to claim 1,
with the transmitted RFID protocol message having an identifier of the RFID reading unit (2A) in addition to the RFID identification data.

3. Apparatus according to claim 1, with an address of the authentication server (6) being configured in the apparatus (2).

4. Apparatus according to claim 1, with an address of the authentication server (6) being determined on the basis of the RFID identification data by the apparatus (2).

5. Apparatus according to claim 4, with the address of the authentication server (6) being contained in the RFID identification data.

6. Apparatus according to claim 4,
with the apparatus (2) having a memory for storing a table, in which addresses of authentication servers (6) for different RFID identification data are stored.

7. Apparatus according to claim 1, with the RFID identification data being encoded in a network access identifier NAI of the authentication network.

8. Apparatus according to claim 1, with the authentication message being transmitted via an access network to the authentication server (6).

9. Apparatus according to claim 8, with the access network being a wireless access network.

10. Apparatus according to claim 9, with the wireless access network being a W-LAN network.

11. Apparatus according to claim 9, with the wireless access network being a WiMax network.

12. Apparatus according to claim 1, with the authentication messages being transmitted from the RFID reading unit (2A) via a wired access network to the authentication server (6).

13. Apparatus according to claim 1, with the authentication messages being transmitted by means of an EAP data transmission protocol.

14. Apparatus according to claim 1, with authentication messages being transmitted by means of a radius data transmission protocol.

15. Apparatus according to claim 1, with the authentication messages being transmitted by means of an HTTP data transmission protocol.

16. Apparatus according to claim 1, with the authentication messages being transmitted by way of at least one authentication proxy server (5) to the authentication server (6).

17. Apparatus according to claim 1, with the apparatus (2) being provided in a mobile transportation vehicle (8).

18. Apparatus according to claim 17, with the transportation vehicle (8) being formed by a ship, an airplane or a truck.

19. Method for providing RFID identification data, which is read out from RFID tags (4), for an authentication server (6), **characterised in that** the read-out RFID identification data is encoded in at least one RFID protocol message and the at least one RFID protocol message is transmitted to the authentication server (6) encoded in authentication messages.

20. System (1) for transmitting RFID identification data, which can be read out from RFID tags (4), to an authentication server (6), **characterised in that** the system is embodied to encode the read-out RFID identification data from an RFID reading unit (2A) into at least one RFID protocol message and to transmit the at least one RFID protocol message to the authentication server (6) encoded in authentication messages by an RFID reading unit (2A).

## Revendications

1. Dispositif (2) comportant une unité de lecture RFID (2A), **caractérisé en ce qu'**il est configuré pour la transmission de données d'identification RFID lues à partir d'étiquettes RFID (4), pour encoder les données d'identification RFID lues dans au moins un message de protocole RFID et transmettre ledit au moins un message de protocole RFID dans des messages d'authentification sous forme codée à un serveur d'authentification (6).

2. Dispositif selon la revendication 1, dans lequel le message de protocole RFID transmis présente une identification de l'unité de lecture RFID (2A) en plus des données d'identification RFID.

3. Dispositif selon la revendication 1, dans lequel une adresse du serveur d'authentification (6) est configurée dans le dispositif (2).

4. Dispositif selon la revendication 1, dans lequel une adresse du serveur d'authentification (6) est déterminée par le dispositif (2) à l'aide des données d'identification RFID.

5. Dispositif selon la revendication 4, dans lequel l'adresse du serveur d'authentification (6) est contenue dans les données d'identification RFID.

6. Dispositif selon la revendication 4, dans lequel le dispositif (2) présente une mémoire pour la mémorisation d'un tableau, dans lequel des adresses de serveurs d'authentification (6) pour différentes données d'identification RFID sont mémorisées.

7. Dispositif selon la revendication 1, dans lequel les données d'identification RFID sont encodées dans un identifiant d'accès au réseau NAI, Network Access Identifier, du message d'authentification.

8. Dispositif selon la revendication 1, dans lequel le message d'identification est transmis via un réseau d'accès au serveur d'authentification (6).

9. Dispositif selon la revendication 8, dans lequel le réseau d'accès est un réseau d'accès sans fil.

10. Dispositif selon la revendication 9, dans lequel le réseau d'accès sans fil est un réseau W-LAN.

11. Dispositif selon la revendication 9, dans lequel le réseau d'accès sans fil est un réseau WiMAX.

12. Dispositif selon la revendication 1, dans lequel les messages d'authentification sont transmis de l'unité de lecture RFID (2A) via un réseau d'accès filaire au serveur d'authentification (6).

13. Dispositif selon la revendication 1, dans lequel les messages d'authentification sont transmis au moyen d'un protocole de transmission de données EAP.

14. Dispositif selon la revendication 1, dans lequel des messages d'authentification sont transmis au moyen d'un protocole de transmission de données Radius.

15. Dispositif selon la revendication 1, dans lequel les messages d'authentification sont transmis au moyen d'un protocole de transmission de données HTTP.

16. Dispositif selon la revendication 1, dans lequel les messages d'authentification sont transmis au serveur d'authentification (6) par l'intermédiaire d'au moins un serveur proxy d'authentification (5).

17. Dispositif selon la revendication 1, dans lequel le dispositif (2) est prévu dans un véhicule de transport mobile (8).

18. Dispositif selon la revendication 17, dans lequel le véhicule de transport (8) est formé par un bateau, un avion ou un camion.

19. Procédé de fourniture de données d'identification RFID, qui sont lues à partir d'étiquettes RFID (4), pour un serveur d'authentification (6), **caractérisé en ce que** l'on encode les données d'identification RFID lues dans au moins un message de protocole RFID et on transmet ledit au moins un message de protocole RFID encodé dans des messages d'authentification au serveur d'authentification (6).

20. Système (1) pour la transmission de données d'identification RFID, qui sont lisibles à partir d'étiquettes RFID (4), à un serveur d'authentification (6), **caractérisé en ce que** le système est configuré de façon à encoder les données d'identification RFID lues à partir d'une unité de lecture RFID (2A) dans au moins un message de protocole RFID et à transmettre ledit au moins un message de protocole RFID encodé dans des messages d'authentification depuis une unité de lecture RFID (2A) au serveur d'authentification (6).
